**Europäisches Patentamt**

**European Patent Office**

**Office européen des brevets**

(19)

(11) Veröffentlichungsnummer : **0 358 134 B1**

(12) # EUROPÄISCHE PATENTSCHRIFT

(45) Veröffentlichungstag der Patentschrift :
**19.11.92 Patentblatt 92/47**

(21) Anmeldenummer : **89116227.3**

(22) Anmeldetag : **02.09.89**

(51) Int. Cl.⁵ : **F16K 49/00**

(54) **Ventil für tiefkalte flüssige Gase.**

(30) Priorität : **08.09.88 DE 3830557**

(43) Veröffentlichungstag der Anmeldung :
**14.03.90 Patentblatt 90/11**

(45) Bekanntmachung des Hinweises auf die
Patenterteilung :
**19.11.92 Patentblatt 92/47**

(84) Benannte Vertragsstaaten :
**AT BE CH DE FR LI NL**

(56) Entgegenhaltungen :
**DE-A- 2 105 623**
**DE-A- 2 413 267**
**DE-A- 2 932 905**

(56) Entgegenhaltungen :
**DE-C- 966 192**
**FR-A- 2 283 310**
**US-A- 3 267 954**
**US-A- 3 973 585**

(73) Patentinhaber : **Linde Aktiengesellschaft**
**Abraham-Lincoln-Strasse 21**
**W-6200 Wiesbaden (DE)**

(72) Erfinder : **Rebhan, Dieter**
**Pfaffenriedstrasse 16**
**W-8192 Gelting (DE)**

(74) Vertreter : **Schaefer, Gerhard, Dr.**
**Linde Aktiengesellschaft Zentrale**
**Patentabteilung**
**W-8023 Höllriegelskreuth (DE)**

EP 0 358 134 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Ventil, mit einem Ventilkörper, einem Verschluß, einem Ventilzufluß und einem Ventilabfluß, wobei von dem Ventilzufluß eine Zweigleitung zu einem zum Wärmetausch des abgezweigten Stromes mit dem Ventilkörper vorgesehenen Wärmetauscher geführt ist, wobei weiter an dem Wärmetauscher ein Abfluß für den abgezweigten Strom angeordnet ist und wobei eine Temperaturregeleinrichtung für den abgezweigten Strom vorgesehen ist.

Ein derartiges Ventil ist aus der DE-A-24 13 267 bekannt und findet dort als Wasserhahn Verwendung. Bei dem Wasserhahn gemäß dieser Druckschrift soll das Gefrieren (d.h. die Kristallisation) von Wasser verhindert werden, indem bei Beginn des Gefriervorgangs der Wasserhahn erwärmt wird. Zu diesem Zweck ist an dem Wasserhahn ein spezielles Gefrierstück vorgesehen, an dem die Eisbildung einsetzt, wodurch Bohrungen in diesem Gefrierstück zugesetzt werden und der sich daraufhin in dem Ventilkörper bildende Druckunterschied zur Betätigung eines Hilfsventiles herangezogen wird, durch welches das stark abgekühlte Wasser abfließen kann und ein Nachfließen von "warmen" Wasser ermöglicht wird. Es wird also eine indirekte Druckmessung vorgenommen durch mechanische Ausnutzung der bei der Aggregatszustandsänderung erfolgenden Kristallisation. Das für das Funktionieren des Wasserhahns der Entgegenhaltung notwendige Verfahren beruht also nicht auf der Erfassung der Temperatur, sondern letzlich auf der bei der gewollt herbeigeführten Aggregatszustandsänderung erfolgenden Kristallisation der Wassermoleküle.

Aufgrund der Bauart des Wasserhahns ist es nicht möglich, diesen für tiefkalte flüssige Gase einzusetzen.

Für tiefkalte flüssige Gase, z.B. Stickstoff oder Helium, die bei bestimmten industriellen Fertigungsabläufen benötigt werden, kommen Stellventile zum Einsatz, die zumeist als Regelventile ausgebildet sind, um eine exakte Dosierung der Gaszufuhr zu ermöglichen. Wegen der tiefkalten Medien werden die Stellventile aus für diesen Temperaturbereich geeigneten Werkstoffen hergestellt. Der Einbau kann in kälteisolierte Behälter oder Rohrleitungen erfolgen. Aus Festigkeitsgründen weisen die Stellventile eine bestimmte Masse auf, die gekühlt werden muß, um ein Verdampfen des durchfließenden tiefkalten flüssigen Gases zu vermeiden. Die Abkühlung des Ventilkörpers erfolgt durch das flüssige Gas selbst. Dies stellt im allgemeinen kein Problem dar, sofern ein gewisser Durchsatz an flüssigem Gas gewährleistet ist. Es tritt jedoch bei der Dosierung von geringen Mengen tiefkalten flüssigen Gases das Problem auf, daß eine Ventilkörperabkühlung aufgrund des kleinen Ventildurchmessers und geringen Gasdurchsatzes nicht im gewünschten Maße erfolgt, so daß das flüssige Gas verdampft. Das nunmehr im Ventilkörper anstehende, in der Gasphase befindliche tiefkalte Gas erzeugt im ungünstigsten Fall einen Druck, der verhindert, daß flüssiges tiefkaltes Gas nachfließt. Das Stellventil läßt sich also nicht abkühlen. Im günstigsten Fall, d.h. wenn trotz Gegendrucks flüssiges Gas nachfließt, dauert es sehr lange bis das Stellventil wegen des durchfließenden, inzwischen verdampften Gases abgekühlt ist und tiefkaltes flüssiges Gas das Ventil in der gewünschten Menge verläßt. Die Förderung von tiefkalten flüssigen Gasen wird also durch den infolge Gasgegendrucks vorhandenen Strömungswiderstand und wegen der infolge großer Masse vorhandener und abzuführenden Wärmemenge behindert und die Regelcharakteristik des Stellventiles verschlechtert.

Der vorliegenden Erfindung liegt die Aufgabe zugrunde, die genannten Nachteile zu vermeiden und ein Ventil der eingangs genannten Art für tiefkalte flüssige Gase mit günstiger Regelcharakteristik zu schaffen.

Diese Aufgabe wird erfindungsgemäß dadurch gelöst, daß die Temperaturregeleinrichtung in dem für den abgezweigten Strom vorgesehenen Abfluß angeordnet ist, wodurch die Anwendung eines solchen Ventils für tiefkalte flüssige Gase ermöglicht wird. Gegenüber einem herkömmlichen Stellventil für tiefkalte flüssige Gase kann der abgezweigte Strom das erfindungsgemäße Ventil auf einer wesentlich größeren Fläche abkühlen als der durch ein Stellventil fließende Gasstrom. Infolgedessen erfolgt eine schnellere Abkühlung des Ventils, wodurch die Regelcharakteristik verbessert wird.

Der Durchfluß des abgezweigten Stroms wird dabei in Abhängigkeit von dessen Temperatur nach erfolgter Kühlung des Ventilkörpers geregelt. Sobald der Ventilkörper auf eine bestimmte Temperatur abgekühlt ist, wird eine weitere Kühlung unterbrochen oder vermindert. Dieser Vorgang läuft auch in umgekehrter Richtung ab, d. h. bei Überschreiten einer bestimmten Temperatur wird die Kühlung des Ventilkörpers wieder in Gang gesetzt.

Besonders vorteilhaft ist es, wenn um den Ventilkörper ein von dem abgezweigten Strom durchströmbares Gehäuse mit einer Anschlußöffnung für die Zweigleitung und einer Anschlußöffnung für den Abfluß des abgezweigten Stroms angeordnet ist. Das Gehäuse übernimmt die Funktion eines Wärmetauschers bzw. Kühlgefäßes, dient also der Kompensation der Wärmemenge der Ventilkörpermasse. Dadurch kann ein herkömmliches Stellventil Verwendung finden. Es ist günstig, wenn das Gehäuse isoliert, insbesondere vakuumisoliert ist. Für kurze Betriebsphasen, in denen möglicherweise wegen ungenügender Abkühlung Gas entsteht, kann das Gehäuse auch als Gasabscheider ausgebildet sein.

Die Eingangsöffnung des Gehäuses ist mit der Zweigleitung verbunden, die von dem Ventilzufluß ausgeht. Durch einen Abfluß verläßt das zu Kühlzwecken herangezogene tiefkalte flüssige Gas das Gehäuse, wobei sich ein Teil des Gases durch Erwärmung am Stellventil in der Gasphase befinden kann. Wenn es Druck, Reinheit und Temperatur des Kühlgases erlauben, kann es nach Verlassen des Gehäuses in den Ventilabfluß eingeleitet werden, z.B. an einer Stelle hinter oder in einem Gasmischer zur Erzeugung von Kaltgasgemischen. Dadurch kann das Kühlgas eventuell einer weiteren Verwertung zugeführt werden. Das Durchleiten von Kühlgas durch das Gehäuse erfolgt nur bei Bedarf. Dies wird durch eine an den Abfluß des abgezweigten Stromes angeschlossene Temperaturmeßeinrichtung erreicht werden. Sobald das Stellventil auf einen bestimmten Sollwert abgekühlt ist, tritt eine mit der Temperaturmeßeinrichtung verbundene Temperaturregeleinrichtung in Aktion, die ein Steuerventil im Abfluß schließt und es bei Bedarf auch wieder öffnet, d.h. dann, wenn die Solltemperatur überschritten wird. Das Steuerventil kann als Magnetventil ausgeführt sein. Wenn sich das Steuerventil im Abfluß des abgezweigten Stromes befindet, ist der Kühlraum immer mit Kühlgas gefüllt, wobei der Aggregatzustand flüssig oder gasförmig sein kann. Es ist natürlich auch möglich, das Steuerventil bereits in der Zweigleitung anzuordnen.

Die Kühlung des Stellventiles kann aber auch dadurch erreicht werden, daß gemäß einer vorteilhaften Weiterbildung des Erfindungsgegenstands der Ventilkörper mit Kanälen versehen ist, die von dem abgezweigten Strom durchströmbar sind. In diesem Fall erübrigt sich ein um das Stellventil angeordnetes Gehäuse. Die Funktion des Wärmetauschers wird direkt durch den Ventilkörper übernommen.

Nach einer anderen zweckmäßigen Ausgestaltung kann aber auch die Zweigleitung mit dem Abfluß für den abgezweigten Strom durch eine wendelförmig um den Ventilkörper angeordnete und als Kühlschlange ausgebildete Leitung verbunden sein, die von dem abgezweigten Strom (Kühlstrom) durchströmbar ist. Die Kühlung des Ventilkörpers erfolgt dann indirekt. Auch in diesem Fall kann auf ein zusätzliches Gehäuse verzichtet werden, es ist dann sinnvollerweise nur eine Isolierung erforderlich.

Das durch den Abfluß fließende Kühlgas kann nach passieren des Steuerventils direkt in die Atmosphäre abgelassen werden. Es ist jedoch auch anderweitig wiederverwendbar, beispielsweise wenn es wieder vollständig verflüssigt und durch eine pumpe in den Flüssiggastank zurückgepumpt wird oder wenn es einer Verbraucherleitung zugeführt werden kann.

Anhand des nachstehenden schematischen Figurenbeispiels soll die Erfindung näher erläutert werden.

Das Stellventil besteht im wesentlichen aus einem Ventilkörper 1 mit einem Verschlußsitz 2 und einem in diesem Beispiel kegelförmigen Verschluß 3, der über eine Spindel 4 vom Verschlußsitz 2 abgehoben werden kann. Die Spindel 4 ist an nicht dargestellte Stell- und Regelorgane angeschlossen. Der Ventilkörper 1 weist eine Gaszufuhröffnung 5 auf und eine an den Verschlußsitz 2 anschließende Gasabfuhröffnung 6. Wenn der Verschluß 3 von seinem Verschlußsitz 2 angehoben wird, strömt tiefkaltes flüssiges Gas aus der Gaszufuhröffnung 5 in die Gasabfuhröffnung 6. Der Ventilkörper 1 ist von einem dicht verschlossenen Gehäuse 7, das als Wärmetauscher dient, umgeben. Das Gehäuse 7 kann in Isolationsmaterial gebettet sein und weist eine Anschlußöffnung 8 und eine Anschlußöffnung 9 auf. Durch die Anschlußöffnung 8 wird flüssiges Kühlgas in das Gehäuse 7 geleitet und durch die Anschlußöffnung 9 aus dem Gehäuse 7 abgelassen.

In die Gaszufuhröffnung 5 mündet ein Ventilzufluß 10. Von dem Ventilzufluß 10 führt eine Zweigleitung 11 zu der Anschlußöffnung 8 des Gehäuses 7. An die Gasabfuhröffnung 6 ist ein Ventilabfluß 12 angeschlossen, der die dosierte Menge an tiefkaltem flüssigem Gas weiterleitet. Die Anschlußöffnung 9 im Gehäuse 7 ist mit einem Abfluß 13 für den abgezweigten Strom verbunden, an den eine Temperaturmeßeinrichtung 14 angeschlossen ist. Die Temperaturmeßeinrichtung 14 meldet die Temperatur des aus dem Gehäuse 7 abgelassenen Kühlgases an eine Temperaturregeleinrichtung 15, der bei Überschreiten einer bestimmten Solltemperatur, die bei ungenügender Kühlung des Stellventils auftritt, den Befehl zum Öffnen eines Steuerventils 16 in den Abfluß 13 gibt. Wenn das Stellventil infolge durch das Gehäuse 7 fließenden Kühlgases ausreichend abgekühlt und die Solltemperatur wieder unterschritten ist, veranlaßt die Temperaturregeleinrichtung 15 das Schließen des Steuerventiles 16. Es ergibt sich durch dieses besonders gestaltete Stellventil eine von Ventilmasse und Verschlußsitzquerschnitt unabhängige Regelung.

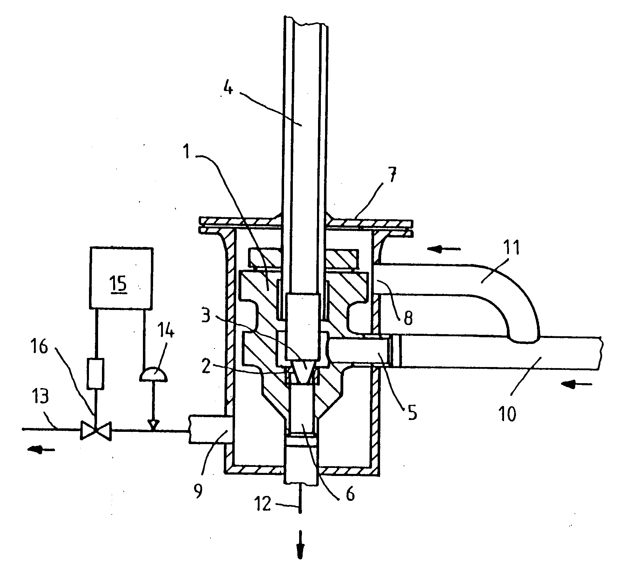

**Patentansprüche**

1. Ventil mit einem Ventilkörper (1), einem Verschluß (3), einem Ventilzufluß (10) und einem Ventilabfluß (12), wobei von dem Ventilzufluß (10) eine Zweigleitung (11) zu einem zum Wärmetauschen des abgezweigten Stromes mit dem Ventilkörper (1) vorgesehenen Wärmetauscher geführt ist, wobei weiter an dem Wärmetauscher ein Abfluß (9) für den abgezweigten Strom angeordnet ist und wobei eine Temperaturregeleinrichtung (15) für den abgezweigten Strom vorgesehen ist, **dadurch gekennzeichnet**, daß die Temperaturregeleinrichtung (15) in dem für den abgezweigten Strom vorgesehenen Abfluß (9) angeordnet ist.

2. Ventil nach Anspruch 1, dadurch gekennzeichnet, daß um den Ventilkörper (1) ein von dem abgezweigten Strom durchströmbares Gehäuse (7) mit einer Anschlußöffnung (8) für die Zweigleitung (11) und einer Anschlußöffnung (9) für den Abfluß (13) des abgezweigten Stroms angeordnet ist.

3. Ventil nach Anspruch 2, dadurch gekennzeichnet, daß das Gehäuse (7) isoliert ist.

4. Ventil nach Anspruch 1, dadurch gekennzeichnet, daß der Ventilkörper (1) mit Kanälen für den abgezweigten Strom versehen ist.

5. Ventil nach Anspruch 1, dadurch gekennzeichnet, daß der Ventilkörper (1) von einer als Kühlschlange ausgebildeten Leitung für den abgezweigten Strom umgeben ist.

6. Ventil nach einem der Ansprüche 1 bis 5, dadurch gekennzeichnet, daß der Kühlstrom nach Verrichtung der Kühlung in den geführten Strom der Gasabfuhrleitung (12) eingeleitet wird.

**Claims**

1. A valve comprising a valve body (1), a closure (3), a valve inlet line (10) and a valve outlet line (12), wherein a branch line (11) leads from the valve inlet line (10) to heat exchanger which serves to exchange the heat of the branched stream with the valve body (1), wherein moreover an outlet line (9) for the branched stream is arranged on the heat exchanger, and wherein a temperature regulating device (15) is provided for the branched stream, characterised in that the temperature regulating device (15) is arranged in the outlet line (9) provided for the branched stream.

2. A valve as claimed in Claim 1, characterised in that around the valve body (1) is arranged a housing (7) which can be traversed by the branched stream and which comprises a connecting opening (8) for the branch line (11) and a connecting opening (9) for the outlet line (13) of the branched stream.

3. A valve as claimed in Claim 2, characterised in that the housing (7) is insulated.

4. A valve as claimed in Claim 1, characterised in that the valve body (1) is provided with channels for the branched stream.

5. A valve as claimed in Claim 1, characterised in that the valve body (1) is surrounded by a pipeline, in the form of a cooling coil, for the branched stream.

6. A valve as claimed in one of Claims 1 to 5, characterised in that, having carried out the cooling, the cooling stream is introduced into the guided stream of the gas outlet line (12).

**Revendications**

1. Valve comprenant un corps de valve (1), un obturateur (3), une entrée de valve (10) et une sortie de valve (12), dans laquelle une canalisation de dérivation (11) part de l'entrée de valve (10) vers un échangeur de chaleur prévu pour réaliser l'échange de chaleur entre le courant dérivé et le corps de valve (1), une sortie (9) pour le courant dérivé étant en outre prévue sur l'échangeur de chaleur et un dispositif de régulation de température (15) étant prévu pour le courant dérivé, caractérisée en ce que le dispositif de régulation de température (15) est disposé sur la sortie (9) prévue pour le courant dérivé.

2. Valve selon la revendication 1, caractérisée en ce qu'un boîtier (7) susceptible d'être traversé par le courant dérivé est disposé autour du corps de valve (1) et est muni d'une ouverture de jonction (8) pour la canalisation de dérivation (11) et une ouverture de jonction (9) pour la sortie (13) du courant dérivé.

3. Valve selon la revendication 2, caractérisée en ce que le boîtier (7) est isolé.

4. Valve selon la revendication 1, caractérisée en ce que le corps de valve (1) est prévu avec des canaux pour le courant dérivé.

5. Valve selon la revendication 1, caractérisée en ce que le corps de valve (1) est entouré d'une conduite pour le courant dérivé, conformée en serpentin de refroidissement.

6. Valve selon l'une des revendications 1 à 5, caractérisée en ce qu'après l'établissement du refroidissement, le courant de refroidissement est introduit dans le courant passant par la canalisation d'évacuation de gaz (12).